# FASCICULE DE BREVET EUROPEEN

(11) **EP 1 473 575 B1**
(45) Date de publication et mention de la délivrance du brevet: **27.07.2011**
(21) Numéro de dépôt: 04290576.0
(22) Date de dépôt: 03.03.2004
(51) Int. Cl.: G01S 1/04, G01S 1/56

(54) **Procédé et dispositif de commutation sur un système d'atterrissage radiofréquence d'un aéronef**
Schaltungsverfahren und Vorrichtung in einem Hochfrequenzlandesystem eines Flugzeuges
Switching method and device in a radio frequency landing system of an aircraft

(30) Priorité: 29.04.2003 FR 0305230
(43) Date de publication de la demande: 03.11.2004
(73) Titulaire: AIRBUS OPERATIONS (SAS), 31060 Toulouse (FR)
(72) Inventeur: Falcati, Michel, 32490 Monferran Saves (FR)
(74) Mandataire: Hauer, Bernard

(56) Documents cités:
- US-A- 4 794 543
- US-A- 5 014 067
- US-B1- 6 469 654

## Description

La présente invention concerne un procédé et un dispositif de commutation sur un système d'atterrissage radiofréquence d'un aéronef, en particulier d'un avion de transport civil.

Comme système d'atterrissage radiofréquence pour avions, on connaît en particulier un système "MLS" ("Microwave Landing System") qui est utilisé comme un moyen d'aide radiofréquence pour les approches automatiques ou manuelles incluant le roulage. Les besoins opérationnels rendent nécessaire de disposer d'un système MLS permettant d'effectuer le même type d'opérations qu'un système d'atterrissage aux instruments de type "ILS" ("Instrument Landing System"), à l'exclusion du guidage au décollage lorsque l'aéronef présente le dos à la station émettrice correspondante.

Les contraintes principales suivantes sont liées à un tel type d'approche :
- l'écart entre le cap de l'aéronef et le cap de la piste, important en début d'approche,
- les attitudes de l'aéronef pendant toute l'approche,
- une règle connue des 19 pieds en phase finale de l'approche (écart vertical entre la trajectoire passant par l'antenne de réception et la trajectoire passant par le dessous du train principal) [exigence imposée par les normes internationales], et
- la forme des diagrammes de rayonnement des antennes du système d'atterrissage radiofréquence.

Pour pouvoir réaliser une telle approche, il est nécessaire d'installer deux antennes sur l'aéronef : l'une en partie inférieure avant et l'autre en partie supérieure avant. Plus spécifiquement, l'écart important entre le cap de l'aéronef et le cap de la piste, combiné aux attitudes de l'aéronef pendant l'approche, nécessite l'installation d'une antenne en partie supérieure de l'aéronef. De plus, pour respecter la règle des 19 pieds, il faut que le récepteur du système d'atterrissage radiofréquence utilise l'entrée qui est reliée à l'antenne inférieure, pour la phase finale de l'approche.

Exemples de l'usage de deux antennes sont divulgués dans US 6 469 654, US 4 794 543 et US 5 014 067.

La conséquence de cette architecture antenne est que la variation du niveau de signal reçu sur les deux entrées radiofréquence du récepteur, n'est pas un phénomène reproductible d'une approche à l'autre (dépendant des diagrammes de rayonnement des antennes qui sont fonction de l'attitude de l'aéronef et dépendant de sa position relative par rapport à l'émetteur au sol). De plus, il n'existe pas de loi physique permettant de lier le niveau de signal reçu sur l'une des entrées du récepteur, venant de l'antenne supérieure au niveau de signal reçu sur l'autre entrée du récepteur, venant de l'antenne inférieure.

Compte tenu des diagrammes de rayonnement des antennes, il est de plus impossible de garantir, lors de la phase finale de l'approche, que l'entrée du récepteur reliée à l'antenne inférieure reçoive toujours plus de niveau de signal que l'autre entrée de ce même récepteur reliée à l'antenne supérieure.

Par ailleurs, en plus des contraintes précitées, liées à l'architecture de l'aéronef, il existe également des contraintes liées audit récepteur du système d'atterrissage radiofréquence.

Une première contrainte est que, pour pouvoir calculer les informations nécessaires au guidage, il lui faut un niveau de signal suffisant sur l'entrée radiofréquence, c'est-à-dire un niveau de signal qui est supérieur à la sensibilité du récepteur, sur au moins l'une des deux entrées radiofréquence. L'architecture antenne garantit qu'au moins l'une des deux entrées du récepteur reçoive un niveau de signal suffisant.

Une seconde contrainte est qu'un tel équipement de radionavigation n'est pas un appareil de mesure, et donc il est impossible de mesurer un niveau de signal en entrée de manière précise. En revanche, le récepteur peut élaborer une information permettant de déterminer l'entrée du récepteur qui présente le niveau de signal le plus élevé.

La présente invention a pour objet de remédier à ces inconvénients. Elle concerne un procédé permettant de commuter, de façon simple et efficace, entre une première entrée (reliée à une antenne inférieure) et une seconde entrée (reliée à une antenne supérieure) d'un récepteur d'un système d'atterrissage radiofréquence d'un aéronef, en tenant compte des contraintes précitées.

A cet effet, selon l'invention, ledit procédé est remarquable en ce que :
- à l'initialisation, on commute sur l'entrée dont le signal présente le niveau le plus élevé ;
- après la phase d'initialisation :
   . on détermine une première valeur d'un paramètre, relativement à l'aéronef, et une seconde valeur de ce même paramètre, relativement à la piste ;
   . on calcule la différence entre ces première et seconde valeurs ; et
   . on commute sur l'une desdites première et seconde entrées, en fonction de cette différence ; et
- on prévoit au moins une boucle d'hystérésis autour des valeurs de commutation.

Dans un premier mode de réalisation, ledit paramètre est l'azimut.

Dans ce cas, avantageusement, à l'initialisation, on commute sur l'une desdites entrées, uniquement si le niveau du signal correspondant est suffisant pour déterminer l'azimut de l'aéronef.

De plus, de façon avantageuse, si à l'initialisation les deux entrées présentent le même niveau de signal, on commute sur ladite première entrée.

De préférence, on détermine une valeur d'azimut de l'aéronef à partir du signal reçu, on compare cette valeur d'azimut à des première et seconde valeurs prédéterminées, et :
- lorsque cette valeur d'azimut est comprise entre lesdites première et seconde valeurs prédéterminées, on met en oeuvre un premier mode de commutation ; et
- lorsque cette valeur d'azimut est inférieure ou égale à ladite première valeur ou supérieure ou égale à ladite seconde valeur, on met en oeuvre un second mode de commutation.

Avantageusement, pour mettre en oeuvre ledit premier mode de commutation :
- on compare un premier niveau de signal issu de ladite première entrée à un second niveau de signal enregistré ; et
- lorsque ledit premier niveau de signal est supérieur audit second niveau de signal, on commute sur ladite première entrée ;
- sinon, on met en oeuvre ledit second mode de commutation.

De préférence, ledit second niveau de signal est obtenu en faisant la moyenne, pendant une durée prédéterminée, du signal présent sur l'entrée sur laquelle l'on commute en premier. L'intervalle de temps, correspondant à ladite durée prédéterminée, pris en compte pour déterminer ledit second niveau de signal, correspond de préférence au premier intervalle de temps à partir de l'initialisation pendant lequel ladite valeur d'azimut est comprise entre lesdites première et seconde valeurs prédéterminées.

En outre, de façon avantageuse, pour mettre en oeuvre ledit second mode de commutation, on commute sur l'entrée qui présente le (niveau de) signal le plus élevé.

Dans un second mode de réalisation, ledit paramètre est le cap.

Dans ce cas, avantageusement, on calcule l'écart entre le cap de l'aéronef et le cap de la piste, et lorsque cet écart est inférieur à une valeur prédéterminée, on commute sur ladite première entrée, sinon on commute sur l'entrée qui présente le (niveau de) signal le plus élevé.

De plus, de façon avantageuse, au moins avant de commuter sur la première entrée, on vérifie si un signal est présent sur cette première entrée, et on réalise la commutation sur ladite première entrée, uniquement si un signal est présent.

La présente invention concerne également un dispositif de commutation pour réaliser la commutation, sur un système d'atterrissage radiofréquence d'un aéronef, entre au moins :
- une première entrée d'un récepteur radiofréquence dudit système d'atterrissage radiofréquence, qui est reliée à une première antenne agencée sur une partie inférieure de l'aéronef et qui reçoit un premier signal ; et
- une seconde entrée du récepteur radiofréquence dudit système d'atterrissage radiofréquence, qui est reliée à une seconde antenne agencée sur une partie supérieure de l'aéronef et qui reçoit un second signal.

Selon l'invention, ledit dispositif est remarquable en ce qu'il comporte des moyens susceptibles de mettre en oeuvre le procédé précité.

Par ailleurs, la présente invention concerne également un système d'atterrissage radiofréquence d'aéronef, du type comportant :
- une première antenne qui est agencée sur une partie inférieure de l'aéronef ;
- une seconde antenne qui est agencée sur une partie supérieure de l'aéronef ; et
- un récepteur radiofréquence comprenant :
   . une première entrée qui est reliée à ladite première antenne ;
   . une seconde entrée qui est reliée à ladite seconde antenne ;
   . une unité de traitement d'informations ; et
   . un dispositif de commutation agencé entre lesdites entrées et ladite unité de traitement d'informations, pour réaliser la commutation entre lesdites première et seconde entrées.

Selon l'invention, ledit dispositif de commutation est du type de celui précité.

Les figures du dessin annexé feront bien comprendre comment l'invention peut être réalisée. Sur ces figures, des références identiques désignent des éléments semblables.

La figure 1 est le schéma synoptique d'un système d'atterrissage radiofréquence conforme à l'invention.

Les figures 2 à 4 sont des graphiques permettant d'expliquer un premier mode de réalisation de l'invention.

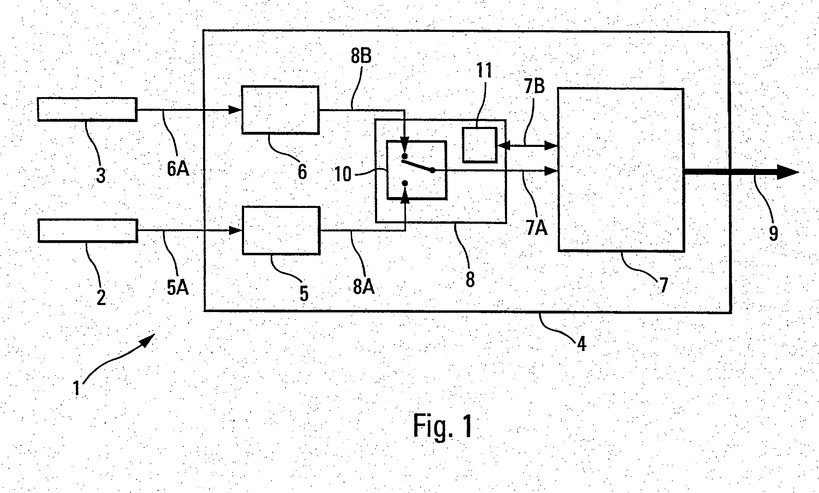

Le système d'atterrissage radiofréquence 1 conforme à l'invention et représenté schématiquement sur la figure 1, par exemple du type "MLS" ("Microwave Landing System"), est destiné à aider un aéronef (non représenté), par exemple un avion de transport civil, lors de son approche d'une piste d'atterrissage en vue de son atterrissage, et éventuellement lors du roulage sur cette piste.

A cet effet, ledit système 1 qui est embarqué sur l'aéronef comporte :
- une première antenne 2 qui est agencée sur une partie inférieure (de préférence à l'avant) de l'aéronef ;
- une seconde antenne 3 qui est agencée sur une partie supérieure (de préférence à l'avant) de l'aéronef ; et
- un récepteur radiofréquence 4 comprenant :
   . une première entrée (radiofréquence) 5 qui est reliée à ladite première antenne 2 par une liaison 5A ;
   . une seconde entrée (radiofréquence) 6 qui est reliée à ladite seconde antenne 3 par une liaison 6A ;
   . une unité d'acquisition et de traitement d'informations 7 ; et
   . un dispositif de commutation 8 conforme à l'invention, qui est agencé entre lesdites entrées 5 et 6 (liaisons 8A et 8B) et ladite unité d'acquisition et de traitement d'informations 7 (liaisons 7A et 7B), pour réaliser la commutation entre lesdites première et seconde entrées 5 et 6 vis-à-vis de ladite unité d'acquisition et de traitement d'informations 7.

Lesdites antennes 2 et 3 sont susceptibles de capter des ondes électromagnétiques qui sont émises par au moins une station émettrice non représentée, installée au sol. Ces ondes électromagnétiques sont reçues et traitées par le récepteur 4, qui en déduit des informations qu'il est susceptible de transmettre à un dispositif utilisateur non représenté, par l'intermédiaire d'une liaison 9. Ces informations sont alors utilisées par ce dispositif utilisateur, notamment pour aider l'aéronef lors de son approche.

Selon l'invention, ledit dispositif de commutation 8 présente les caractéristiques suivantes :
- à l'initialisation, il commute, par l'intermédiaire d'un moyen de commutation usuel 10, sur l'entrée 5, 6 dont le signal présente le niveau le plus élevé ;
- après la phase d'initialisation :
   . il détermine, par exemple par l'intermédiaire d'une unité de calcul 11 qui est reliée par la liaison 7B à l'unité 7, une première valeur d'un paramètre, relativement à l'aéronef, ainsi qu'une seconde valeur de ce même paramètre, relativement à la piste ;
   . il calcule, par exemple par l'intermédiaire de l'unité de calcul 11, la différence entre ces première et seconde valeurs ; et
   . il commute, par l'intermédiaire du moyen de commutation 10, sur l'une desdites première et seconde entrées 5, 6, en fonction de cette différence ; et
- il comprend de plus au moins une boucle d'hystérésis, autour des valeurs de commutation, comme précisé ci-dessous.

Dans un premier mode de réalisation, on utilise comme paramètre précité l'azimut. L'unité 7 du récepteur 4 élabore des informations angulaires correspondant à la position de l'aéronef par rapport à un axe horizontal d'approche et à la pente d'approche, dépendant de la piste. Pour fournir le même type d'information qu'un système usuel d'atterrissage aux instruments de type "ILS" [déviations exprimées en unités "DDM" ("Difference in Depth of Modulation") : information correspondant à l'écart de l'aéronef par rapport à l'axe et à la pente d'approche], le récepteur 4 convertit ces informations angulaires en déviations exprimées en unités DDM, à l'aide de formules de transformation connues définies par les normes internationales.

Dans ce premier mode de réalisation :
- pour l'initialisation, le récepteur 4 choisit l'entrée radiofréquence 5, 6 qui présente la première un niveau de signal suffisant pour faire le premier calcul de l'azimut ; et
- si les deux entrées radiofréquence 5, 6 présentent le même niveau de signal, alors l'entrée radiofréquence 5 reliée à l'antenne inférieure 2 est sélectionnée, pour faire le calcul des déviations (azimut).

Par ailleurs, le récepteur 4 :
- détermine une valeur d'azimut AZ de l'aéronef à partir du signal reçu ;
- compare cette valeur d'azimut à des première et seconde valeurs prédéterminées -AZ1 et AZ1 ; et
- à partir de cette comparaison, en déduit quel mode de commutation MC entre deux modes de commutation MC1 et MC2 doit être mis en oeuvre par le dispositif de commutation 8.

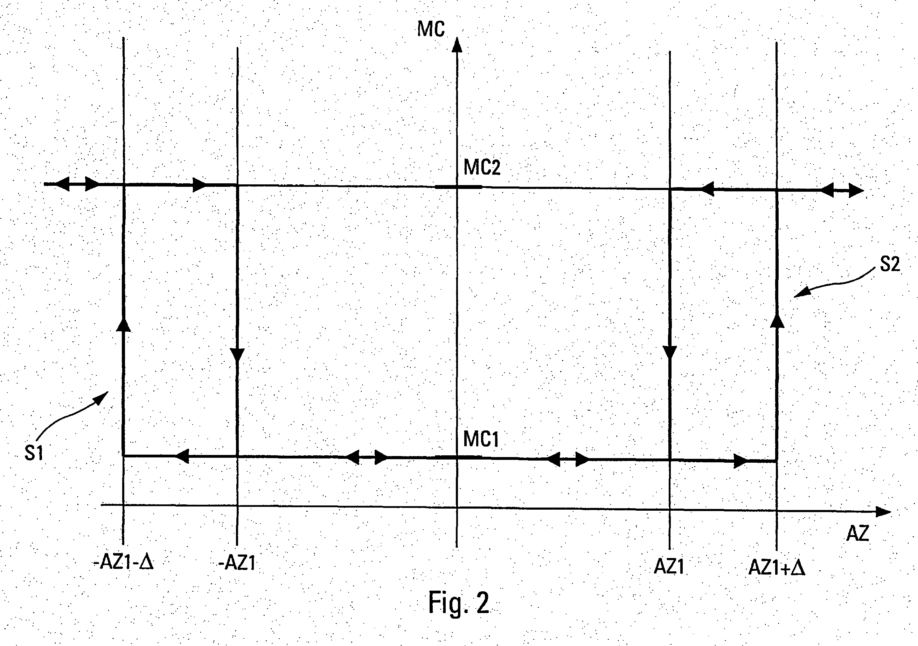

De préférence, comme représenté sur la figure 2 :
- lorsque cette valeur d'azimut AZ est comprise entre lesdites première et une seconde valeurs prédéterminées -AZ1 et AZ1, ledit dispositif de commutation 8 met en oeuvre un premier mode de commutation MC1 ; et
- lorsque cette valeur d'azimut AZ est inférieure ou égale à ladite première valeur -AZ1 ou supérieure ou égale à ladite seconde valeur AZ1, ledit dispositif 8 met en oeuvre un second mode de commutation MC2.

Pour éviter des changements trop fréquents entre les deux modes de commutation MC1 et MC2, on prévoit des boucles d'hystérésis S1 et S2 de type usuel, autour des valeurs de commutation -AZ1 et AZ1. La première boucle d'hystérésis S1 utilise des valeurs -AZ1-Δ et -AZ1 pour la valeur d'azimut AZ, et la seconde boucle d'hystérésis S2 utilise des valeurs AZ1 et AZ1 +Δ pour la valeur d'azimut AZ.

A titre d'exemple, dans un mode de réalisation particulier, on peut utiliser les valeurs particulières suivantes :
■ AZ1 = 0,200 DDM ; et
■ Δ = 0,100 DDM.

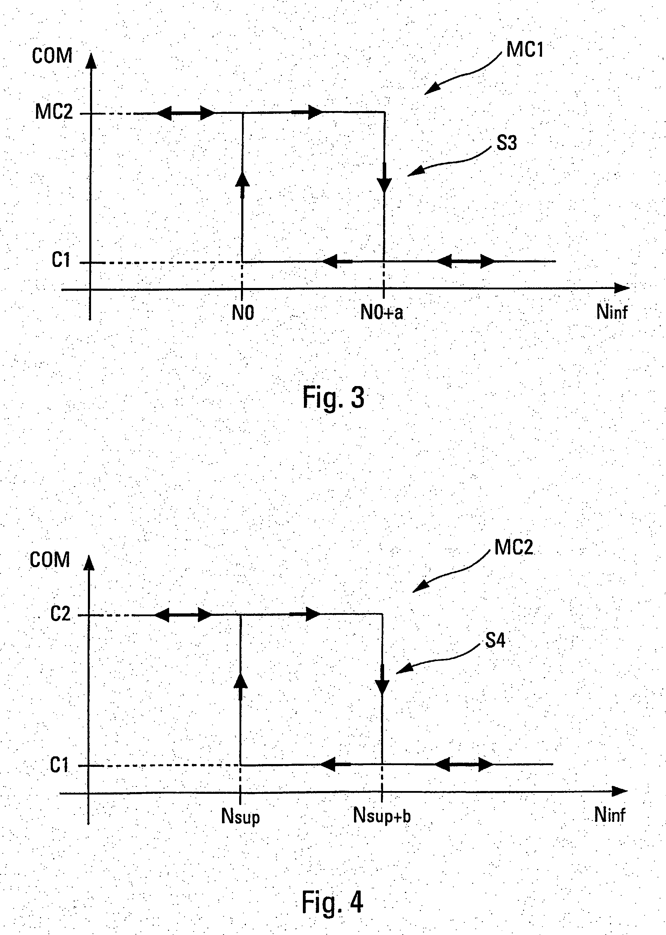

Selon ledit premier mode de commutation MC1, comme représenté sur la figure 3, le récepteur 4 :
- mesure le niveau de signal Ninf à l'entrée 5 reliée à l'antenne inférieure 2;
- compare ce niveau de signal Ninf à un niveau de signal prédéterminé NO; et
- en fonction de cette comparaison :
   . si Ninf est supérieur à NO, commute sur l'entrée 5 reliée à l'antenne inférieure 2 (commutation C1) ;
   . sinon, met en oeuvre le second mode de commutation MC2, précisé ci-dessous.

Ledit niveau de signal NO est obtenu en faisant la moyenne, pendant une durée prédéterminée, par exemple 500 ms, du signal présent sur l'entrée 5, 6, sur laquelle on commute en premier. L'intervalle de temps, correspondant à ladite valeur prédéterminée, pris en compte pour déterminer ledit second niveau de signal, correspond de préférence au premier intervalle de temps à partir de l'initialisation pendant lequel ladite valeur d'azimut est comprise entre lesdites première et seconde valeurs prédéterminées. Cette valeur NO est ensuite enregistrée. Cette moyenne permet de lisser le niveau de signal dans le temps et de diminuer l'effet du bruit.

On prévoit de plus une boucle d'hystérésis S3 qui est définie entre la valeur NO et une valeur NO+a, a étant par exemple égal à 2dB.

Selon ledit second mode de commutation MC2, comme représenté sur la figure 4, ledit récepteur 4 :
- compare le niveau de signal Ninf à l'entrée 5 (reliée à l'antenne inférieure 2) au niveau de signal Nsup à l'entrée 6 (reliée à l'antenne supérieure 3) ; et
- en fonction de cette comparaison :
   . si Ninf est supérieur à Nsup, commute sur l'entrée 5 (reliée à l'antenne inférieure 2) [commutation C1] ;
   . sinon, commute sur l'entrée 6 (reliée à l'antenne supérieure 3) [commutation C2].

On prévoit de plus une boucle d'hystérésis S4 qui est définie entre la valeur Nsup et une valeur Nsup + b, b étant par exemple égal à 2dB.

Par ailleurs, dès que le récepteur 4 n'a plus suffisamment de signal sur les deux entrées 5 et 6, les déviations passent à l'état non valide, et on recommence les étapes précédentes dès que l'une des deux entrées 5 et 6 reçoit suffisamment de niveau de signal pour calculer des déviations.

Dans un second mode de réalisation de l'invention, on utilise, comme paramètre précité, le cap de l'aéronef et le cap de la piste.

Dans ce cas, le récepteur 4 est, par exemple, un récepteur multi-mode d'aide à l'atterrissage de type "MMR" ("Multi-Mode Receiver"), qui, de façon usuelle, reçoit le cap sur une carte GPS, à partir d'informations issues de centrales à inertie de type "IRS" ("Inertial Reference System").

Lorsque la valeur absolue de l'écart du cap de la piste par rapport au cap de l'aéronef est inférieure à une valeur prédéterminée, cette valeur étant fonction des diagrammes de rayonnement des antennes 2 et 3 et des attitudes de l'aéronef, le dispositif de commutation 8 du récepteur 4 commute sur l'entrée 5 reliée à l'antenne inférieure 2. Cette logique peut être consolidée en utilisant une mesure de niveau sur cette entrée 5.

Lorsque ladite valeur absolue de l'écart du cap de la piste par rapport au cap de l'aéronef est supérieure à ladite valeur prédéterminée, le dispositif de commutation 8 du récepteur 4 commute sur l'entrée 5, 6 qui présente le niveau de signal le plus élevé.

De plus, dans ce second mode de réalisation :
- à l'initialisation, le récepteur 4 utilise l'antenne 2, 3 (entrée 5, 6) qui présente le plus de niveau de signal ; et
- après la phase d'initialisation, quand l'écart du cap de l'aéronef par rapport au cap de la piste est inférieur à une valeur prédéterminée, le récepteur 4 commute sur l'entrée 5 reliée à l'antenne inférieure 2.

Par ailleurs :
- pour couvrir le cas où l'écart du cap de l'aéronef par rapport au cap de la piste reste longtemps proche de la valeur de commutation, une boucle d'hystérésis est mise en oeuvre pour éviter des commutations trop fréquentes et non nécessaires entre l'entrée 6 reliée à l'antenne supérieure 3 et l'entrée 5 reliée à l'antenne inférieure 2 ; et
- pour couvrir les cas de panne non détectée de l'antenne inférieure 2, une mesure du niveau sur l'entrée 5 reliée à cette antenne inférieure 2 est réalisée avant de commuter, afin de ne pas forcer l'utilisation de l'antenne inférieure 2 si elle ne reçoit pas de signal.

## Revendications

1. Procédé de commutation pour réaliser la commutation, sur un système d'atterrissage radiofréquence (1) d'un aéronef, entre au moins :
- une première entrée (5) d'un récepteur radiofréquence (4) du système d'atterrissage radiofréquence (1), qui est reliée à une première antenne (2) agencée sur une partie inférieure de l'aéronef et qui reçoit un premier signal ; et
- une seconde entrée (6) du récepteur radiofréquence (4) du système d'atterrissage radiofréquence (1), qui est reliée à une seconde antenne (3) agencée sur une partie supérieure de l'aéronef et qui reçoit un second signal,
**caractérisé en ce que** :
- à l'initialisation, on commute sur l'entrée (5, 6) dont le signal présente le niveau le plus élevé ;
- après la phase d'initialisation :
. on détermine une première valeur d'un paramètre, relativement à l'aéronef, et une seconde valeur de ce même paramètre, relativement à la piste ;
. on calcule la différence entre ces première et seconde valeurs ; et
. on commute sur l'une desdites première et seconde entrées (5, 6), en fonction de cette différence ; et
- on prévoit au moins une boucle d'hystérésis (S1, S2, S3, S4) autour des valeurs de commutation.

2. Procédé selon la revendication 1,
**caractérisé en ce que** ledit paramètre est l'azimut.

3. Procédé selon la revendication 2,
**caractérisé en ce qu'**à l'initialisation, on commute sur l'une desdites entrées (5, 6), uniquement si le niveau du signal correspondant est suffisant pour déterminer l'azimut de l'aéronef.

4. Procédé selon l'une des revendications 2 et 3,
**caractérisé en ce que**, si à l'initialisation les deux entrées (5, 6) présentent le même niveau de signal, on commute sur ladite première entrée (5).

5. Procédé selon l'une quelconque des revendications 2 à 4, **caractérisé en ce que** l'on détermine une valeur d'azimut (AZ) de l'aéronef à partir du signal reçu et on compare cette valeur d'azimut (AZ) à des première et seconde valeurs prédéterminées (-AZ1, AZ1),
et **en ce que** :
- lorsque cette valeur d'azimut (AZ) est comprise entre lesdites première et seconde valeurs prédéterminées (-AZ1, AZ1), on met en oeuvre un premier mode de commutation (MC1) ; et
- lorsque cette valeur d'azimut (AZ) est inférieure ou égale à ladite première valeur (-AZ1) ou supérieure ou égale à ladite seconde valeur (AZ1), on met en oeuvre un second mode de commutation (MC2).

6. Procédé selon la revendication 5,
**caractérisé en ce que**, pour mettre en oeuvre ledit premier mode de commutation (MC1) :
- on compare un premier niveau de signal (Ninf) dudit premier signal issu de ladite première antenne (2) à un second niveau de signal (N0) enregistré ; et
- lorsque ledit premier niveau de signal (Ninf) est supérieur audit second niveau de signal (N0), on commute sur ladite première entrée (5) ;
- sinon, on met en oeuvre ledit second mode de commutation (MC2).

7. Procédé selon la revendication 6,
**caractérisé en ce que** ledit second niveau de signal (N0) est obtenu en faisant la moyenne, pendant une durée prédéterminée, du signal présent sur l'entrée (5, 6) sur laquelle l'on commute en premier.

8. Procédé selon l'une quelconque des revendications 5 à 7, **caractérisé en ce que**, pour mettre en oeuvre ledit second mode de commutation (MC2), on commute sur l'entrée (5, 6) qui présente le signal le plus élevé.

9. Procédé selon la revendication 1,
**caractérisé en ce que** ledit paramètre est le cap.

10. Procédé selon la revendication 9,
**caractérisé en ce que** l'on calcule l'écart entre le cap de l'aéronef et le cap de la piste, et **en ce que** lorsque cet écart est inférieur à une valeur prédéterminée, on commute sur ladite première entrée (5), sinon on commute sur l'entrée (5, 6) qui présente le signal le plus élevé.

11. Procédé selon l'une des revendications 9 et 10,
**caractérisé en ce que**, au moins avant de commuter sur la première entrée (5), on vérifie si un signal est présent sur cette première entrée (5), et **en ce que** l'on réalise la commutation sur ladite première entrée (5), uniquement si un signal est présent.

12. Dispositif de commutation pour réaliser la commutation, sur un système d'atterrissage radiofréquence (1) d'un aéronef, entre au moins :
- une première entrée (5) d'un récepteur radiofréquence (4) dudit système d'atterrissage radiofréquence (1), qui est reliée à une première antenne (2) agencée sur une partie inférieure de l'aéronef et qui reçoit un premier signal ; et
- une seconde entrée (6) du récepteur radiofréquence (4) dudit système d'atterrissage radiofréquence (1), qui est reliée à une seconde antenne (3) agencée sur une partie supérieure de l'aéronef et qui reçoit un second signal,
**caractérisé en ce qu'**il comporte des moyens (8) susceptibles de mettre en oeuvre le procédé spécifié sous l'une quelconque des revendications 1 à 11.

13. Système d'atterrissage radiofréquence d'aéronef comportant :
- une première antenne (2) qui est agencée sur une partie inférieure de l'aéronef ;
- une seconde antenne (3) qui est agencée sur une partie supérieure de l'aéronef ; et
- un récepteur radiofréquence (4) comprenant :
. une première entrée (5) qui est reliée à ladite première antenne (2) ;
. une seconde entrée (6) qui est reliée à ladite seconde antenne (3) ;
. une unité de traitement d'informations (7) ; et
. un dispositif de commutation (8) agencé entre lesdites entrées (5, 6) et ladite unité de traitement d'informations (7), pour réaliser la commutation entre lesdites première et seconde entrées (5, 6),
**caractérisé en ce que** ledit dispositif de commutation (8) est du type de celui spécifié sous la revendication 12.

## Claims

1. A method of switching for carrying out switchover, on a radiofrequency landing system (1) of an aircraft, between at least:
- a first input (5) of a radiofrequency receiver (4) of the radiofrequency landing system (1), which input is connected to a first antenna (2) disposed on a lower part of the aircraft and receives a first signal; and
- a second input (6) of the radiofrequency receiver (4) of the radiofrequency landing system (1), which input is connected to a second antenna (3) disposed on an upper part of the aircraft and receives a second signal,
**characterized in that**:
- on initialization, switchover occurs to the input (5, 6) whose signal exhibits the highest level;
- after the initialization phase:
• a first value of a parameter, in relation to the aircraft, and a second value of this same parameter, in relation to the runway, is determined;
• the difference between these first and second values is computed; and
• switchover occurs to one of said first and second inputs (5, 6), as a function of this difference; and
- at least one hysteresis loop (S1, S2, S3, S4) around the switching values is provided.

2. The method as claimed in claim 1,
**characterized in that** said parameter is the azimuth.

3. The method as claimed in claim 2,
**characterized in that**, on initialization, switchover occurs to one of said inputs (5, 6) only if the level of the corresponding signal is sufficient to determine the azimuth of the aircraft.

4. The method as claimed in one of claims 2 and 3,
**characterized in that** if, on initialization, the two inputs (5, 6) exhibit the same signal level, switchover occurs to said first input (5).

5. The method as claimed in any one of claims 2 to 4,
**characterized in that** a value of azimuth (AZ) of the aircraft is determined on the basis of the signal received and this value of azimuth (AZ) is compared to predetermined first and second values (-AZ1, AZ1),
and **in that**:
- when this value of azimuth (AZ) lies between said predetermined first and second values (-AZ1, AZ1), a first mode of switchover (MC1) is implemented; and
- when this value of azimuth (AZ) is less than or equal to said first value (-AZ1) or greater than or equal to said second value (AZ1), a second mode of switchover (MC2) is implemented.

6. The method as claimed in claim 5,
**characterized in that**, to implement said first mode of switchover (MC1) :
- a first signal level (Ninf) of said first signal emanating from said first antenna (2) is compared to a second signal level (N0) recorded; and
- when said first signal level (Ninf) is greater than said second signal level (N0), switchover occurs to said first input (5);
- otherwise, said second mode of switchover (MC2) is implemented.

7. The method as claimed in claim 6,
**characterized in that** said second signal level (N0) is obtained by averaging, over a predetermined duration, the signal present on the input (5, 6) to which switchover occurs first.

8. The method as claimed in any one of claims 5 to 7,
**characterized in that**, to implement said second mode of switchover (MC2), switchover occurs to the input (5, 6) which exhibits the highest signal.

9. The method as claimed in claim 1,
**characterized in that** said parameter is the heading.

10. The method as claimed in claim 9,
**characterized in that** the discrepancy between the heading of the aircraft and the heading of the runway is computed, and **in that**, when this discrepancy is less than a predetermined value, switchover occurs to said first input (1), otherwise switchover occurs to the input (5, 6) which exhibits the highest signal.

11. The method as claimed in one of claims 9 and 10,
**characterized in that**, at least before switchover to the first input (5), one verifies whether a signal is present on this first input (5), and **characterized in that** the switchover to said first input (5) is carried out only if a signal is present.

12. A switching device for carrying out switchover, on a radiofrequency landing system (1) of an aircraft, between at least:
- a first input (5) of a radiofrequency receiver (4) of said radiofrequency landing system (1), which input is connected to a first antenna (2) disposed on a lower part of the aircraft and receives a first signal; and
- a second input (6) of the radiofrequency receiver (4) of said radiofrequency landing system (1), which input is connected to a second antenna (3) disposed on an upper part of the aircraft and receives a second signal,
**characterized in that** it comprises means (8) able to implement the method specified in any one of claims 1 to 11.

13. An aircraft radiofrequency landing system comprising:
- a first antenna (2), which is disposed on a lower part of the aircraft;
- a second antenna (3), which is disposed on an upper part of the aircraft; and
- a radiofrequency receiver (4) comprising;
• a first input (5), which is connected to said first antenna (2);
• a second input (6), which is connected to said second antenna (3);
• an information processing unit (7); and
• a switching device (8) disposed between said inputs (5, 6) and said information processing unit (7) so as to carry out switchover between said first and second inputs (5, 6),
**characterized in that** said switching device (8) is of the type of that specified in claim 12.

## Patentansprüche

1. Umschaltverfahren, um die Umschaltung bei einem Hochfrequenzlandesystem (1) eines Flugzeugs zwischen mindestens Folgendem durchzuführen:
- einem ersten Eingang (5) eines Hochfrequenzempfängers (4) des Hochfrequenzlandesystems (1), der mit einer ersten Antenne (2) verbunden ist, die auf einem unteren Teil des Flugzeugs angeordnet ist und die ein erstes Signal empfängt; und
- einem zweiten Eingang (6) eines Hochfrequenzempfängers (4) des Hochfrequenzlandesystems (1), der mit einer zweiten Antenne (3) verbunden ist, die auf einem oberen Teil des Flugzeugs angeordnet ist und die ein zweites Signal empfängt;
**dadurch gekennzeichnet, dass**
- bei der Initialisierung auf den Eingang (5, 6) umgeschaltet wird, dessen Signal das höchste Niveau aufweist;
- nach der Initialisierungsphase:
. ein erster Wert eines Parameters bezüglich des Flugzeugs und ein zweiter Wert dieses gleichen Parameters bezüglich der Piste festgelegt wird;
. der Unterschied zwischen diesem ersten und zweiten Wert berechnet wird; und
. auf den ersten oder den zweiten Eingang (5, 6) umgeschaltet wird, je nach diesem Unterschied; und
- mindestens eine Hystereseschleife (S1, S2, S3, S4) um Umschaltwertewerte vorgesehen wird.

2. Verfahren nach Anspruch 1,
**dadurch gekennzeichnet, dass** der Parameter das Azimut ist.

3. Verfahren nach Anspruch 2,
**dadurch gekennzeichnet, dass** bei der Initialisierung auf einen der Eingänge (5, 6) nur dann umgeschaltet wird, wenn das Niveau des entsprechenden Signals ausreichend ist, um das Azimut des Flugzeugs zu bestimmen.

4. Verfahren nach einem der Ansprüche 2 und 3,
**dadurch gekennzeichnet, dass**, wenn bei der Initialisierung die zwei Eingänge (5, 6) das gleiche Signalniveau aufweisen, auf den ersten Eingang (5) umgeschaltet wird.

5. Verfahren nach einem der Ansprüche 2 bis 4,
**dadurch gekennzeichnet, dass** ein Azimutwert (AZ) des Flugzeugs ausgehend vom erhaltenen Signal festgelegt wird und dieser Azimutwert (AZ) mit einem vorbestimmten ersten und zweiten Wert (-AZ1, AZ1) verglichen wird,
und **dadurch**, dass:
- wenn dieser Azimutwert (AZ) zwischen dem vorbestimmten ersten und zweiten Wert (-AZ1, AZ1) liegt, ein erster Umschaltmodus (MC1) durchgeführt wird; und
- wenn dieser Azimutwert (AZ) geringer als der erste oder gleich dem ersten Wert (-AZ1) oder größer als der zweite oder gleich dem zweiten Wert (AZ1) ist, wird ein zweiter Umschaltmodus (MC2) durchgeführt.

6. Verfahren nach Anspruch 5,
**dadurch gekennzeichnet dass**, um den ersten Umschaltmodus (MC1) durchzuführen:
- ein erstes Signalniveau (Ninf) des ersten Signals, stammend aus der ersten Antenne (2) mit einem zweiten registrierten Signalniveau (NO) verglichen wird; und
- wenn das erste Signalniveau (Ninf) höher als das zweite Signalniveau (NO) ist, auf den ersten Eingang (5) umgeschaltet wird;
- andernfalls wird der zweite Umschaltmodus (MC2) durchgeführt.

7. Verfahren nach Anspruch 6,
**dadurch gekennzeichnet, dass** das zweite Signalniveau (NO) durch die Mittlung des Signals, anwesend im Eingang (5, 6), auf den zunächst umgeschaltet wird, während einer vorbestimmten Dauer, erhalten wird.

8. Verfahren nach einem der Ansprüche 5 bis 7,
**dadurch gekennzeichnet, dass**, um den zweiten Umschaltmodus (MC2) durchzuführen, auf den Eingang (5, 6) umgeschaltet wird, der das höchste Signal aufweist.

9. Verfahren nach Anspruch 1,
**dadurch gekennzeichnet, dass** der Parameter die Richtung ist.

10. Verfahren nach Anspruch 9,
**dadurch gekennzeichnet, dass** die Abweichung zwischen der Richtung des Flugzeugs und der Richtung der Piste berechnet wird, und **dadurch**, dass, wenn diese Abweichung geringer als ein vorbestimmter Wert ist, auf den ersten Eingang (5) umgeschaltet wird, andernfalls auf den Eingang (5, 6) umgeschaltet wird, der das höchste Signal aufweist.

11. Verfahren nach einem der Ansprüche 9 und 10,
**dadurch gekennzeichnet, dass** mindestens vor dem Umschalten auf den ersten Eingang (5) überprüft wird, ob ein Signal auf diesem ersten Eingang (5) vorhanden ist, und **dadurch**, dass die Umschaltung auf den ersten Eingang (5) nur durchgeführt wird, wenn ein Signal vorhanden ist.

12. Umschaltverfahren, um die Umschaltung bei einem Hochfrequenzlandesystem (1) eines Flugzeugs zwischen mindestens Folgendem durchzuführen:
- einem ersten Eingang (5) eines Hochfrequenzempfängers (4) des Hochfrequenzlandesystems (1), der mit einer ersten Antenne (2) verbunden ist, die auf einem unteren Teil des Flugzeugs angeordnet ist und die ein erstes Signal empfängt; und
- einem zweiten Eingang (6) eines Hochfrequenzempfängers (4) des Hochfrequenzlandesystems (1), der mit einer zweiten Antenne (3) verbunden ist, die auf einem oberen Teil des Flugzeugs angeordnet ist und die ein zweites Signal empfängt; und **dadurch gekennzeichnet, dass** es Mittel (8) umfasst, die dazu geeignet sind, das Verfahren, spezifiziert in einem der Ansprüche 1 bis 11, durchzuführen.

13. Hochfrequenzlandesystem eines Flugzeugs, umfassend:
- eine erste Antenne (2), die auf einem unteren Teil des Flugzeugs angebracht ist;
- eine zweite Antenne (3), die auf einem oberen Teil des Flugzeugs angebracht ist; und
- einen Hochfrequenzempfänger (4), umfassend:
. einen ersten Eingang (5), der mit der ersten Antenne (2) verbunden ist;
. einen zweiten Eingang (6), der mit der zweiten Antenne (3) verbunden ist;
. eine Informationsverarbeitungseinheit (7); und
. eine Umschaltvorrichtung (8), angebracht zwischen den Eingängen (5, 6) und der Informationsverarbeitungseinheit(7), um die Umschaltung zwischen dem ersten und dem zweiten Eingang (5, 6) durchzuführen,
**dadurch gekennzeichnet, dass** die Umschaltvorrichtung (8) der Art derjenigen ist, die in Anspruch 12 spezifiziert wird.
